# EUROPÄISCHE PATENTSCHRIFT

(11) **EP 4 126 649 B1**
(45) Veröffentlichungstag und Bekanntmachung des Hinweises auf die Patenterteilung: **14.08.2024**
(21) Anmeldenummer: 21707657.9
(22) Anmeldetag: 22.02.2021
(51) Int. Cl.: B62M 6/55, H02K 5/22, H02K 7/08, H02K 7/116, H02K 11/215

(54) **ANTRIEBSEINHEIT**
DRIVE UNIT
UNITÉ D'ENTRAÎNEMENT

(30) Priorität: 23.03.2020 DE 102020203714
(43) Veröffentlichungstag der Anmeldung: 08.02.2023
(73) Patentinhaber: ZF Friedrichshafen AG, 88046 Friedrichshafen (DE)
(72) Erfinder: KRAFT, Steffen, 89134 Blaustein (DE); PERCIC, Miran, 73540 Heubach (DE); NIERESCHER, Rüdiger, 73529 Schwäbisch Gmünd (DE); KRAFT, Klaus, 89134 Blaustein (DE)
(86) Internationale Anmeldenummer: PCT/EP2021/054258
(87) Internationale Veröffentlichungsnummer: WO 2021/190842

(56) Entgegenhaltungen:
- EP-A2- 0 980 821
- WO-A2-2018/096521
- CN-A- 102 310 919
- CN-Y- 201 105 798
- DE-B3- 102015 100 676
- JP-A- 2005 094 841
- US-A- 6 104 112
- US-B2- 10 308 314

## Beschreibung

Die Erfindung betrifft eine Antriebseinheit für ein muskelkraftbetriebenes Fahrzeug mit den Merkmalen des Oberbegriffs von Anspruch 1. Zudem betrifft die Erfindung eine Baugruppe aus einem Kabelstrang für ein muskelkraftbetriebenes Fahrzeug und einer Antriebseinheit mit den Merkmalen des nebengeordneten Anspruchs.

DE 10 2015 100 676 A1 offenbart eine Antriebsbaugruppe mit einem manuellen Antrieb, einem elektrischen Hilfsantrieb, einem Wellgetriebe und einem gemeinsamen Abtriebselement. Die Antriebseinheit weist einen komplexen Aufbau mit einer Vielzahl einzelner Komponenten und Lagerstellen auf.

EP 2 724 926 A1 offenbart eine zentrale Antriebseinheit mit einer Tretlagerwelle für einen manuellen Antrieb und einen Hilfsantrieb mit einem Motor und einem dem Motor nachgeschalteten Planetengetriebe. Auch diese Antriebseinheit weist einen vergleichsweise komplexen Aufbau mit einer Vielzahl einzelner Komponenten auf. DE 10 2014 108 611 A1 offenbart eine Fahrradantriebsvorrichtung mit einem Antriebsgehäuse zur Aufnahme einer Tretkurbelwelle, einem Spannungswellengetriebe, das innerhalb des Antriebsgehäuses angeordnet und mit einem Zugmittelträger triebtechnisch in Verbindung bringbar ist. Diese Fahrradantriebsvorrichtung verfügt ebenfalls über einen komplexen Aufbau. Die Montage gestaltet sich als aufwändig.

US 6 104 112 A zeigt eine, gattungsgemäße, kompakte, in sich geschlossene bürstenlose Motorbaugruppe für ein Fahrrad, bei der ein Stator fest auf einer Nabe montiert ist. EP 0 980 821 A2 zeigt eine Antriebseinheit für ein Fahrrad mit einem Planetengetriebe und einem Elektromotor zur Unterstützung des Fahrers.

CN 102 310 919 A zeigt eine Antriebseinheit für ein Fahrrad mit einem Elektromotor zur Unterstützung des Fahrers.

Der Erfindung liegt die Aufgabe zugrunde, eine demgegenüber verbesserte Antriebseinheit bereitzustellen. Insbesondere sind eine Bauteilverringerung, eine Funktionsintegration und eine Package-Optimierung wünschenswert.

Die Erfindung löst die Aufgabe mit einer Antriebseinheit mit den Merkmalen des Anspruchs 1. Die Antriebseinheit ist als Antriebseinheit für ein manuell angetriebenes (muskelkraftbetriebenes) Fahrzeug ausgebildet, insbesondere für ein Fahrrad oder ein EPAC (Electrically Power Assisted Cycle). Bei der Antriebseinheit kann es sich um eine Fahrradantriebseinrichtung handeln.

Die Antriebseinheit weist ein Gehäuse, einen Elektromotor mit einem Stator und einem Rotor, einen Statorträger und eine Elektronik auf. Die Elektronik kann eine Elektronikplatine aufweisen oder als Elektronikplatine ausgebildet sein. Der Statorträger, der Stator, der Rotor und die Elektronik sind als eine vormontierbare Einheit (Baugruppe) ausgebildet, so dass die vormontierte Einheit als Ganzes in das Gehäuse der Antriebseinheit montiert, das heißt im Gehäuse angeordnet und befestigt, sein kann.

Durch Zusammenfassung der genannten Komponenten zu einer Baugruppe ist die Handhabung bei der Montage vereinfacht. So werden beim Zusammenbau der Antriebseinheit die zusammengefassten Komponenten nicht einzeln, sondern als Baugruppe in das Gehäuse der Antriebseinheit montiert. Dadurch kann eine Endmontage der Baugruppe optimiert werden. Mit der Zusammenfassung der Komponenten ist zudem eine vormontierte und funktional prüfbare Baugruppe gegeben. Indem der Statorträger nicht nur den Stator, sondern weitere Komponenten im Antriebsgehäuse befestigt, erfüllt der Statorträger mehrere Funktionen und es können eine höhere Funktionsintegration und eine Bauteilverringerung erreicht werden.

Die Antriebseinheit kann für einen manuellen Antrieb eine Tretkurbelwelle aufweisen, die im Gehäuse der Antriebseinheit drehbar gelagert ist. Zudem kann die Antriebseinheit einen Hilfsantrieb aufweisen, der als wesentliche Komponenten einen Elektromotor und ein Wellgetriebe aufweist, wobei der Elektromotor mechanisch mit dem Wellgetriebe gekoppelt ist. Der manuelle Antrieb und der Hilfsantrieb können mit einem gemeinsamen Abtriebselement gekoppelt sein, an dem beispielsweise ein Kettenblatt oder ein Kettenblattträger befestigt ist.

Das Abtriebselement kann als Hohlwelle ausgebildet sein, die die Tretkurbelwelle in axialer Richtung abschnittsweise radial außen umgibt. Radial zwischen der Tretlagerwelle und dem Abtriebselement können Freilaufkupplungen angeordnet sein, von denen eine Freilaufkupplung den Hilfsantrieb beziehungsweise das Wellgetriebe mit dem Abtriebselement koppelt und eine weitere Freilaufkupplung die Tretlagerwelle mit dem Abtriebselement koppelt. Die Freilaufkupplungen können axial benachbart zueinander angeordnet sein und/oder mit einer Innenfläche insbesondere der inneren Umfangsfläche der Abtriebswelle zusammenwirken.

Das Wellgetriebe kann eingangsseitig mit dem Elektromotor und ausgangsseitig mit dem Abtriebselement gekoppelt sein. Das Wellgetriebe kann einen Wellgenerator, eine verformbare zylindrische Buchse beziehungsweise Innenbuchse mit Außenverzahnung (Flexspline) und einen zylindrischen Außenring beziehungsweise Außenbuchse mit Innenverzahnung aufweisen. Der Wellgenerator kann als elliptische Scheibe mit darauf angeordnetem Wälzlager und optional einem verformbaren Laufring ausgebildet sein. Der Flexspline kann ringförmig oder topfförmig ausgebildet sein. Üblicherweise dient der Flexspline als Abtrieb des Wellgetriebes.

Der Statorträger kann einen, insbesondere ring- oder hülsenförmigen, Trageabschnitt und einen, insbesondere scheibenförmigen, Befestigungsabschnitt aufweisen. Diese beiden Abschnitte können als separate Elemente ausgebildet und aneinander befestigt oder als ein gemeinsames Bauelement in einstückiger Ausgestaltung ausgebildet sein. An dem Trageabschnitt kann beispielsweise der Stator befestigt und/oder der Rotor drehbar gelagert sein. Über den Befestigungsabschnitt kann der Statorträger mit dem Gehäuse der Antriebseinheit verbunden, das heißt an oder in der Antriebseinheit befestigt sein.

Der Rotor ist mittels nur eines Wälzlagers am Statorträger in einer ersten Lagerstelle gelagert. Hiermit ist eine konstruktiv günstige Lagerung mit einer geringen Anzahl an Komponenten und geringem Platzbedarf geschaffen. Das Magnetfeld des Elektromotors kann eine zweite Lagerstelle als dynamisches Magnetlager darstellen, sobald ein Magnetfeld über die Statorspulen aufgebracht wird. Somit ist eine Lagerung des Rotors durch ein Wälzlager (erste Lagerstelle) und ein Magnetlager (zweite Lagerstelle) geschaffen.

In vorteilhafter Weise können am Statorträger, insbesondere am Befestigungsabschnitt, eine oder mehrere Durchführungen für elektrische Signalleitungen und/oder elektrische Leistungsleitungen ausgebildet sein. Dies begünstigt eine einfache Kontaktierung mit kurzen Kabellängen, da diese durch den Statorträger hindurchgeführt werden können, beispielsweise von der Elektronik zum Elektromotor.

Optional können der Stator, die Elektronik und/oder der Rotor am Statorträger befestigt sein, wobei der Rotor mittels eines Wälzlagers am Statorträger gelagert sein kann. Der Statorträger ist zentrales Element der Baueinheit, welches zumindest den Stator mit Spulen, das Wälzlager des Rotors und die Elektronik aufnimmt. Die Elektronik, beispielsweise eine Elektronikplatine, kann an einer Seite des Statorträgers beziehungsweise von dessen Befestigungsabschnitt angeordnet sein, beispielsweise an einer Außenseite, und der Elektromotor an der anderen Seite, beispielsweise einer Innenseite. Somit ist die Elektronik getrennt vom elektrischen Hilfsantrieb angeordnet.

In vorteilhafter Weise kann der Statorträger einen radial nach außen abragenden Befestigungsabschnitt aufweisen, mittels dem der Statorträger in dem Gehäuse der Antriebseinheit montiert beziehungsweise fixiert werden kann, insbesondere mittels eines Pressverbands. Hiermit ist eine kompakte und stabile Befestigung möglich, beispielsweise ohne separate Befestigungselemente. Die Außengeometrie des Statorträgers beispielsweise der Außenumfang kann mit der Innengeometrie des Gehäuses beispielsweise dem Innenumfang korrespondieren. Durch den Pressverband kann eine öldichte Verbindung zwischen Befestigungsabschnitt und Gehäuse hergestellt werden, beispielsweise durch Verwendung von Dichtmasse. Somit kann auf einer Seite des Befestigungsabschnitts eine Schmierung der Antriebskomponenten ohne Beeinträchtigung der Elektronik auf der anderen Seite des Befestigungsabschnitts erfolgen.

In zweckmäßiger Weise kann der Elektromotor als Außenläufermotor ausgebildet sein, das heißt der Rotor des Elektromotors kann als Außenläufer ausgebildet sein. Der Rotor umgibt den Stator nach radial außen. Durch diese Bauweise können eine vorteilhafte Leistungsdichte und eine vergleichsweise kompakte Baugröße erreicht werden.

In vorteilhafter Weise kann der Rotor abtriebsseitig einen hülsenförmigen Kopplungsabschnitt zur Kopplung mit einem in dem Gehäuse angeordneten Wellgetriebe aufweisen, wobei der Kopplungsabschnitt eine elliptische Außenkontur aufweisen kann. Der Kopplungsabschnitt ist somit die abtriebsseitige Schnittstelle zum Wellgetriebe. Der Wellgenerator ist als Kopplungsabschnitt direkt in den Rotor des Elektromotors integriert. Der Kopplungsabschnitt ist zur Aufnahme des Wälzlagers des Wellengenerators (Flexlager) eingerichtet.

In zweckmäßiger Weise kann der Stator des Elektromotors mit dem Statorträger vergossen sein. Die Vergussmasse kann sich, zumindest abschnittsweise, über den radial nach außen abragenden Befestigungsabschnitt und/oder den hülsenförmigen Trageabschnitt des Statorträgers erstrecken. Durch die Vergussmasse können Spulenwicklungen des Stators fixiert und eine steife Verbindung zwischen Stator und Statorträger hergestellt werden. Zudem kann über den Statorträger eine thermische Anbindung an das Gehäuse erfolgen. Auch eine Abdichtung der elektrischen Signal- und Leistungsleitungen beziehungsweise deren Durchführungen kann durch die Vergussmasse erreicht werden. Die Vergussmasse kann beispielsweise thermisch leitend und/oder elektrisch isolierend sein.

In zweckmäßiger Weise kann ein elektrischer Flexleiter vorgesehen sein, der zwei Lagen aufweist und als zweischichtiger Flexleiter ausgebildet und einends mit der Elektronik, beispielsweise Elektronikplatine verbunden ist und andernends eine elektrische Schnittstelle mit mehreren Kontaktflächen zum Anschluss eines fahrzeugseitigen Steckers aufweist. Hiermit ist eine besonders kompakte elektrische Leitungsführung geschaffen. Eine Lage des Flexleiters kann zur Leistungsübertragung als elektrisch leistungsübertragende Lage und die zweite Lage zur Signalübertragung als elektrische signalübertragende Lage ausgebildet sein.

In vorteilhafter Weise kann an der Außenseite des Gehäuses eine Nut ausgebildet sein, in der der Flexleiter und die elektrische Schnittstelle angeordnet sind. Durch Ausgestaltung als Flexleiter sind zur Leitungsführung eine nur geringe Nuttiefe ohne Beeinflussung der Innengeometrie des Gehäuses der Antriebseinheit möglich. Eine Durchführung von Abschnitten des Flexleiters, beispielsweise von Kontaktfahnen zum Anschluss des Flexleiters an die Elektronik, kann, von radial außen nach radial innen, durch einen im Gehäuse ausgebildeten Schlitz erfolgen.

Optional können die Lagen des Flexleiters durch eine Vergussmasse oder eine Abdeckung bedeckt sein, wobei an der elektrischen Schnittstelle eine Durchgangsöffnung in der Vergussmasse oder der Abdeckung ausgebildet ist. Auf diese Weise ist eine mechanische Fixierung und Abdichtung des Flexleiters im Gehäuse ermöglicht. Die Vergussmasse oder die Abdeckung können an der Außenseite des Gehäuses ausgebildete Nut nach radial außen vorzugsweise bündig verschließen.

In vorteilhafter Weise können die elektrischen Kontaktflächen als ebene Kontakte zur Übertragung von elektrischer Leistung und elektrischem Signal ausgebildet sein. Die ebenen Kontakte ragen aus dem Flexleiter beziehungsweise aus einer Lage des Flexleiters nicht oder nur unerheblich heraus. Somit kann ein Einbau der Antriebseinheit in das Fahrzeug erleichtert werden, da keine Gefahr der Abscherung eines hervorstehenden Steckerelements bei der Montage besteht.

In zweckmäßiger Weise kann die Elektronik eine Positionssensorik zur Erfassung der Drehstellung der Tretkurbelwelle der Antriebseinheit aufweisen, wobei die Positionssensorik einen oder mehrere gehäusefeste Näherungsensoren und ein drehfest an der Tretkurbelwelle befestigtes und mit dem oder den Näherungssensoren zusammenwirkendes Exzenterelement, insbesondere einen Exzenterring, aufweist. Somit erfolgt eine radiale Erfassung der Drehstellung der Tretkurbelwelle. Der oder die Näherungssensoren weisen einen Erfassungsbereich auf, in dem sich das Exzenterelement befindet. Der oder die Näherungssensoren können an der Elektronik beziehungsweise auf der Elektronikplatine angeordnet und/oder jeweils als Hallsensor, Infrarotsensor oder als induktiv arbeitender Sensor oder ähnliches ausgebildet sein. Durch den Näherungssensor kann abstandsbasiert eine Bestimmung der Drehposition der Tretkurbelwelle erfolgen, da die Anordnung des Exzenterelements bezogen auf die Tretkurbelwelle bekannt ist. Durch die Positionssensorik kann eine Winkeländerung, die Winkelgeschwindigkeit und/oder die erste Ableitung der Winkelgeschwindigkeit bestimmt werden.

Die eingangs genannte Aufgabe wird auch durch eine Baugruppe mit den Merkmalen des nebengeordneten Anspruchs gelöst.

Die Baugruppe umfasst einen elektrischen Kabelstrang für ein manuell angetriebenes Fahrzeug, insbesondere ein Fahrrad oder ein EPAC, und eine Antriebseinheit. Der Kabelstrang kann einen Anschlussstecker zum Anschluss an die elektrische Schnittstelle des Flexleiters aufweisen, wobei der Anschlussstecker gefederte Kontaktpins zur elektrischen Kontaktierung von Kontaktflächen des Flexleiters aufweist. Es kann eine Halteklammer vorgesehen sein, mittels der der Anschlussstecker an der Antriebseinheit gesichert werden kann, wobei die Halteklammer den Anschlussstecker umgreift und (einends oder beidenends) in Aussparungen einrastet, die an der Außenseite des Gehäuses der Antriebseinheit insbesondere der Mantelfläche ausgebildet sind. Der Kabelstrang kann einen Teil eines Kabelbaums des Fahrzeugs bilden.

Hinsichtlich der hiermit erzielbaren Vorteile sei auf die diesbezüglichen Ausführungen zur Antriebseinheit verwiesen. Zur weiteren Ausgestaltung der Baugruppe können die im Zusammenhang mit der Antriebseinheit beschriebenen Maßnahmen dienen.

Die Erfindung wird nachfolgend anhand der Figuren erläutert, wobei gleiche oder funktional gleiche Elemente mit identischen Bezugszeichen versehen sind. Es zeigen:
- Fig. 1: ein Ausführungsbeispiel der erfindungsgemäßen Antriebseinheit in einer schematischen Schnittansicht;
- Fig. 2: den Statorträger und das Gehäuse der Antriebseinheit aus Fig. 1;
- Fig. 3a, b: den Rotor des Elektromotors der Antriebseinheit aus Fig. 1 in Seitenansicht (Fig. 3a) und in perspektivischer Ansicht (Fig. 3b);
- Fig. 4: den Statorträger mit Stator der Antriebseinheit aus Fig. 1,
- Fig. 5: den Statorträger der Antriebseinheit aus Fig. 1 mit Stator und Rotor;
- Fig. 6a, b: das Gehäuse der Antriebseinheit aus Fig. 1 mit Flexleiter und Stecker eines fahrzeugseitigen Kabelstrangs in perspektivischer Ansicht (Fig. 6a) und in Schnittansicht (Fig. 6b);
- Fig. 7: den Flexleiter und den Stecker aus Fig.6 a, b in einer perspektivischen Ansicht von unten;
- Fig. 8 a, b: den Flexleiter aus Fig.6 a, b und Fig. 7 in Explosionsdarstellung (Fig. 8 a) und im zusammengebauten Zustand (Fig. 8 b); und
- Fig. 9 a, b: die Positionssensorik der Antriebseinheit aus Fig. 1 in Schnittansicht (Fig. 9 a) und in Seitenansicht (Fig. 9 b).

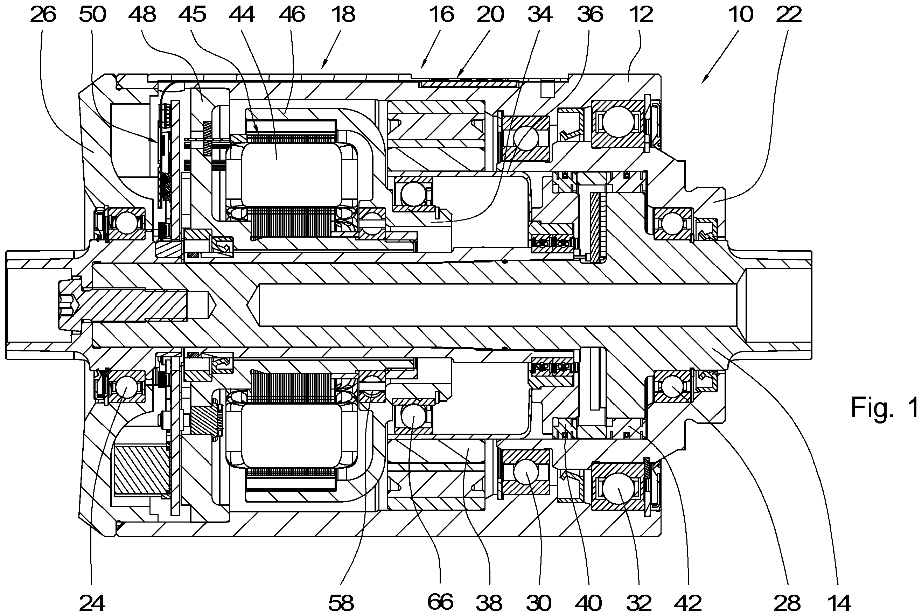

Figur 1 zeigt eine Antriebseinheit für ein manuell angetriebenes Fahrzeug wie beispielsweise ein Fahrrad, wobei die Antriebseinheit insgesamt mit dem Bezugszeichen 10 bezeichnet ist.

Die Antriebseinheit 10 weist ein Gehäuse 12 auf, an oder in dem die Komponenten der Antriebseinheit 10 angeordnet sind. Die Antriebseinheit 10 weist für einen manuellen Antrieb, das heißt einen Antrieb durch Muskelkraft, eine Tretkurbelwelle 14 auf, die im Gehäuse 12 der Antriebseinheit 10 drehbar gelagert ist. Zudem weist die Antriebseinheit 10 einen elektrischen Hilfsantrieb 16 auf, der einen Elektromotor 18 und ein Wellgetriebe 20 aufweist, wobei der Elektromotor 18 mit dem Wellgetriebe 20 mechanisch gekoppelt ist. Die Tretkurbelwelle 14 und der Hilfsantrieb 16 sind mit einem gemeinsamen Abtriebselement 22 gekoppelt, an dem ein Kettenblattträger oder ein Kettenblatt (nicht dargestellt) befestigbar ist.

Die Tretkurbelwelle 14 ist mittels eines ersten Wälzlagers 24 an einem Gehäusedeckel 26 gelagert, der das Gehäuse 12 der Antriebseinheit 10 zu einer Seite hin (in Fig.1 nach links) verschließt. Zudem ist die Tretkurbelwelle 14 mittels eines zweiten Wälzlagers 28 am Abtriebselement 22 drehbar gelagert. Das Abtriebselement 22 ist mittels eines dritten Wälzlagers 30 und eines vierten Wälzlagers 32 im Gehäuse 12 drehbar gelagert.

Das Wellgetriebe 20 weist einen Wellgenerator 34, eine verformbare zylindrische Buchse beziehungsweise Innenbuchse 36 mit Außenverzahnung (Flexspline) und einen zylindrischen Außenring 38 mit Innenverzahnung auf. Das Wellgetriebe 20 ist eingangsseitig mit dem Elektromotor 18 und ausgangsseitig mit dem Abtriebselement 22 gekoppelt, und zwar mittels einer ersten Freilaufkupplung 40. Die Tretkurbelwelle 14 ist mittels einer weiteren zweiten Freilaufkupplung 42 mit dem Abtriebselement 22 gekoppelt.

Der Elektromotor 18 weist einen Stator 44 mit Statorspulen 45 und einen Rotor 46 auf. Die Antriebseinheit 10 weist weiter einen Statorträger 48 und eine Elektronikeinheit 50 auf, die als Elektronikplatine ausgebildet ist. Der Statorträger 48 (Fig.1, 2, 4 und 5) weist einen beispielsweise hülsenförmigen Trageabschnitt 52 und einen beispielsweise scheibenförmigen Befestigungsabschnitt 54 auf. Der Trageabschnitt 52 und der Befestigungsabschnitt 54 sind im Beispiel einstückig ausgebildet.

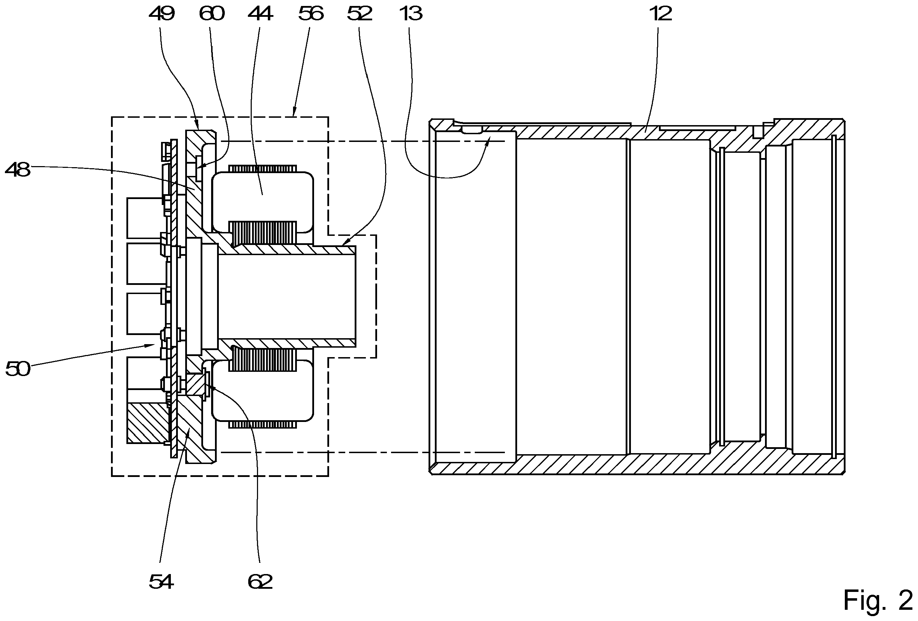

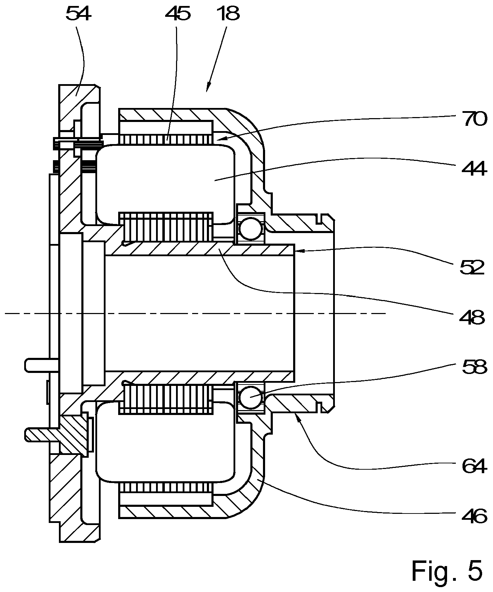

Der Statorträger 48, der Stator 44, der Rotor 46 und die Elektronik 50 sind als eine vormontierbare Einheit 56 (Fig.2 und 5) ausgebildet, so dass die vormontierte Einheit 56 als Ganzes in das Gehäuse 12 der Antriebseinheit 10 montiert werden kann.

An dem Trageabschnitt 52 (Fig.5) ist der Stator 44 befestigt und der Rotor 46 ist mittels eines Wälzlagers 58 drehbar am Trageabschnitt 52 gelagert. Über den Befestigungsabschnitt 54 kann der Statorträger 48 mit dem Gehäuse 12 der Antriebseinheit 10 verbunden werden.

Am Statorträger 48 (Fig. 2), insbesondere am Befestigungsabschnitt 54, sind Durchführungen für die elektrischen Signalleitungen 60 und für die elektrischen Leistungsleitungen 62 ausgebildet. Der Stator 44, die Elektronik 50 und der Rotor 46 sind am Statorträger 48 befestigt, wobei der Rotor 46 mittels des Wälzlagers 58 am Statorträger 48 gelagert ist. Die Elektronik beziehungsweise die Elektronikplatine 50 ist an einer Seite des Statorträgers 48 beziehungsweise des Befestigungsabschnitts 54 angeordnet und der Elektromotor 18 an der anderen Seite.

Wie bereits erläutert, weist der Statorträger 48 einen radial nach außen abragenden Befestigungsabschnitt 54 auf, mittels dem der Statorträger 48 in dem Gehäuse 12 der Antriebseinheit 10 montiert werden kann, was im Beispiel mittels eines Pressverbands erfolgt. Die Außengeometrie 49 des Statorträgers 48 beziehungsweise des Befestigungsabschnitts 54 korrespondiert mit der Innengeometrie 13 des Gehäuses 12 (Fig.2). Durch den Pressverband kann eine öldichte Verbindung zwischen Befestigungsabschnitt 54 und Gehäuse 12 hergestellt werden, beispielsweise durch Verwendung von Dichtmasse (nicht dargestellt).

Der Elektromotor 18 (Fig. 1, 5) ist als Außenläufermotor ausgebildet, das heißt der Rotor 46 des Elektromotors 18 ist als Außenläufer ausgebildet und umgibt den Stator 44 radial außen.

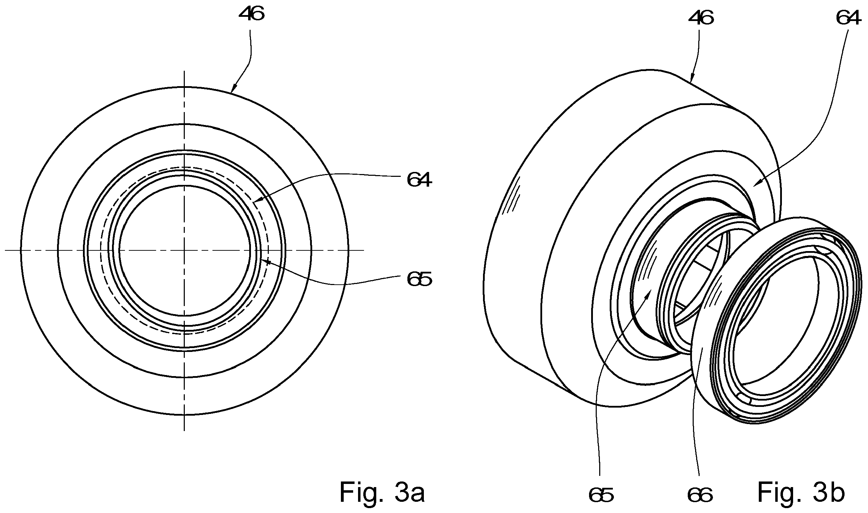

Der Rotor 46 (Fig. 1, 2, 3 a, 3 b) weist abtriebsseitig einen hülsenförmigen Kopplungsabschnitt 64 zur Kopplung mit dem im Gehäuse 12 angeordneten Wellgetriebe 20 auf, wobei der Kopplungsabschnitt 64 eine elliptische Außenkontur 65 aufweist. Der Kopplungsabschnitt 64 ist somit die abtriebsseitige Schnittstelle zum Wellgetriebe 20. Der Kopplungsabschnitt 64 ist zur Aufnahme des Wälzlagers 66 als Flexlager des Wellengenerators 20 eingerichtet.

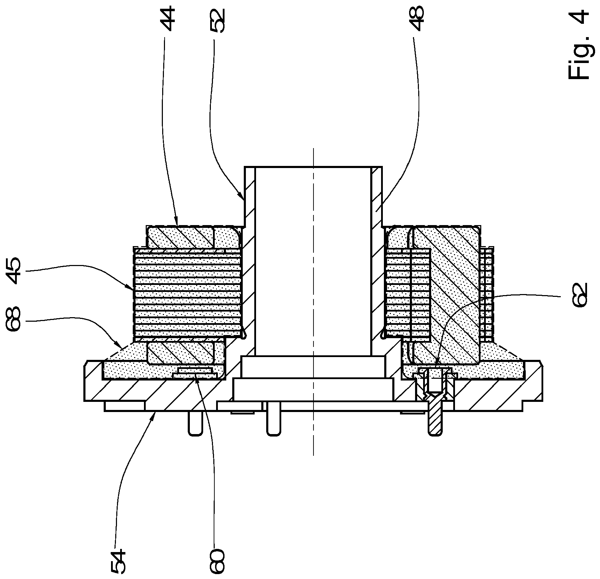

Der Stator 44 (Fig. 4) des Elektromotors 18 ist im Beispiel mit dem Statorträger 48 durch eine Vergussmasse 68 fixiert. Die Vergussmasse 68 erstreckt sich abschnittsweise über den Befestigungsabschnitt 54 und den Trageabschnitt 52 des Statorträgers 48. Die Vergussmasse 68 fixiert mechanisch die Spulenwicklungen 45 des Stators 44. Zudem dichtet die Vergussmasse 68 die Signal- und Leistungsleitungen beziehungsweise deren Durchführungen 60, 62 ab.

Der Rotor 46 (Fig. 5) ist lediglich mittels des einen Wälzlagers 58 als erste Lagerstelle am Statorträger 48 gelagert. Das Magnetfeld des Elektromotors 18 bildet eine zweite Lagerstelle 70 als "dynamisches Magnetlager", sobald ein Magnetfeld über die Statorspulen aufgebracht wird.

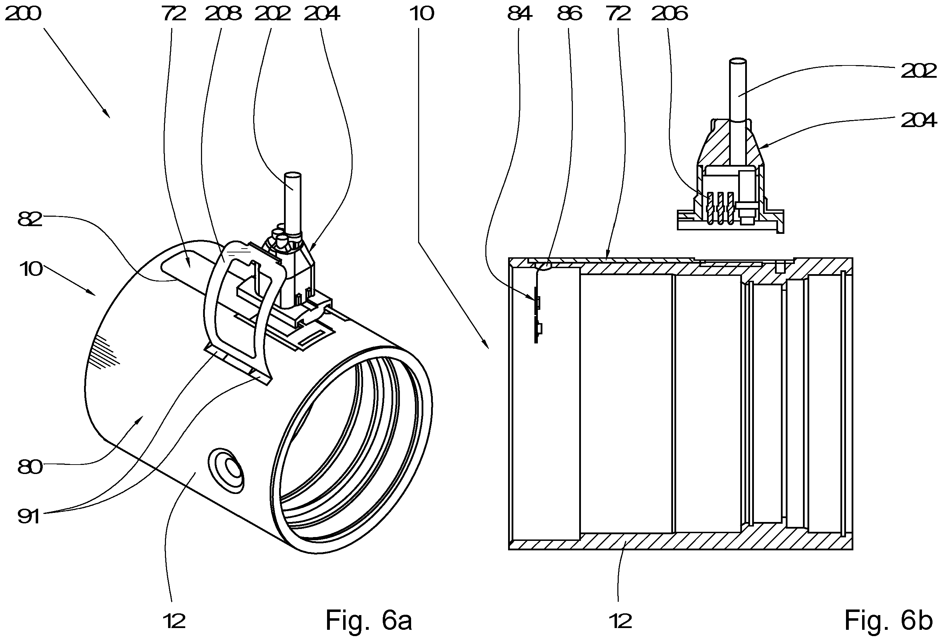

Zudem ist ein Flexleiter 72 (Fig. 6 a, b, 7, 8 a, 8 b) vorgesehen, der als zweischichtiger Flexleiter ausgebildet ist und zwei Lagen 74, 76 aufweist und einends mit der Elektronik 50 beziehungsweise der Elektronikplatine verbunden ist und andernends eine elektrische Schnittstelle 78 mit mehreren ebenen Kontaktflächen 79 zum Anschluss eines fahrzeugseitigen Steckers 204 aufweist. Eine erste Lage 74 des Flexleiters 72 ist als elektrisch leistungsübertragende Lage 74 und die zweite Lage 76 als elektrisch signalübertragende Lage 76 ausgebildet.

An der Außenseite 80 des Gehäuses 12 (Fig. 6 a, b). ist eine Nut 82 ausgebildet, in der der Flexleiter 72 und die elektrische Schnittstelle 78 angeordnet sind. Eine Durchführung von Abschnitten des Flexleiters 72, beispielsweise von Kontaktfahnen 84 zum Anschluss des Flexleiters 72 an die Elektronik 50, kann (von radial außen nach radial innen) durch einen im Gehäuse 12 ausgebildeten Schlitz 86 erfolgen

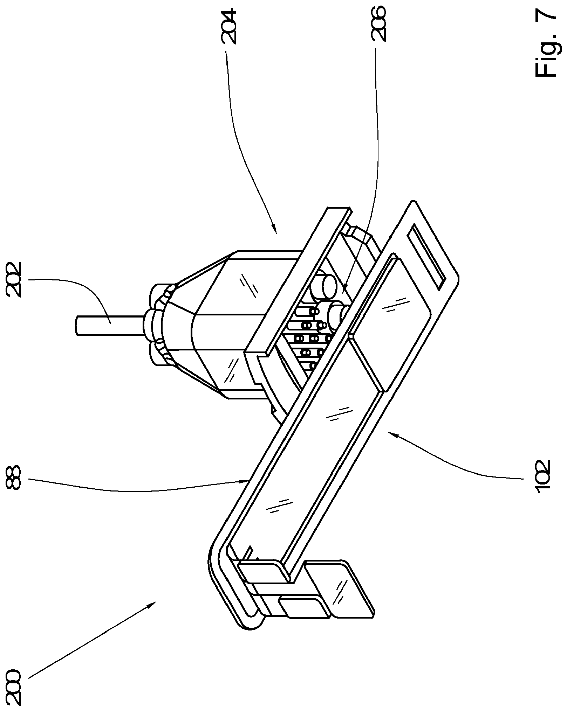

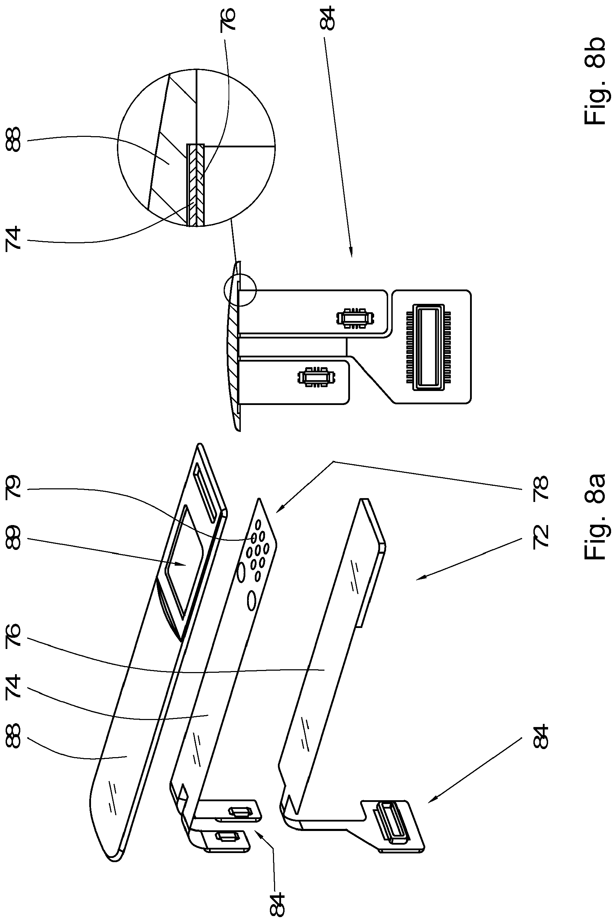

Die Lagen 74, 76 des Flexleiters 72 (Fig. 7, 8 a, 8 b) können durch eine Vergussmasse oder eine Abdeckung 88 verschlossen sein, wobei an der elektrischen Schnittstelle 78 eine Durchgangsöffnung 89 (in der Vergussmasse oder der Abdeckung 88) ausgebildet ist. Die Vergussmasse oder Abdeckung 88 kann die Nut 82 nach radial außen vorzugsweise bündig verschließen.

Die Kontaktflächen 79 sind als ebene Kontakte 79 ausgebildet und ragen aus dem Flexleiter 72 beziehungsweise aus einer Lage 74, 76 des Flexleiters 72 nicht oder nur unerheblich heraus (Fig.8 a, b).

Die Fig. 6 a, 6b, 7, 8 a und 8 b zeigen eine Baugruppe 200 umfassend einen lediglich partiell dargestellten Kabelstrang 202 für ein manuell angetriebenes Fahrzeug und eine Antriebseinheit 10. Der Kabelstrang 202 weist an seinem einen Ende einen Stecker 204 zum Anschluss an die elektrische Schnittstelle 78 des Flexleiters 72 auf. Der Anschlussstecker 204 weist gefederte Kontaktpins 206 zur elektrischen Kontaktierung der korrespondierenden Kontaktflächen 79 des Flexleiters 72 aufweist.

Zudem ist eine Halteklammer 208 vorgesehen (Fig. 6 a), mittels welcher der Anschlussstecker 204 an der Antriebseinheit 10 gesichert werden kann. Die Halteklammer 208 ist derart ausgebildet, um den Anschlussstecker 204 zu umgreifen und einends oder beidenends in Aussparungen 91 einzugreifen, die an der Außenseite 80 des Gehäuses 12 der Antriebseinheit 10 ausgebildet sind. Dadurch ist der Anschlussstecker 204 am Gehäuse 12 gesichert.

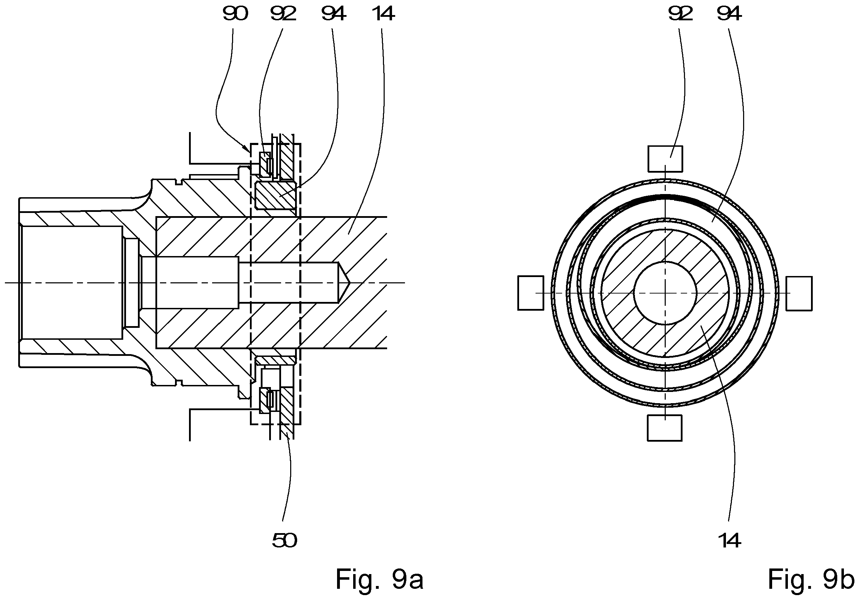

Die Elektronik (Fig. 9 a, b) weist eine Positionssensorik 90 zur Erfassung der Drehstellung der Tretkurbelwelle 14 der Antriebseinheit 10 auf, wobei die Positionssensorik 90 mehrere Näherungsensoren 92, hier im Beispiel vier Näherungssensoren 92, über den Umfang verteilt und einen drehfest an der Tretkurbelwelle 14 befestigtes und mit den Näherungssensoren 92 zusammenwirkendes Exzenterelement, beispielsweise einen Exzenterring 94 aufweist.

Die Näherungssensoren 92 sind an der Elektronik 50 beziehungsweise auf der Elektronikplatine angeordnet. Die Näherungssensoren 92 können jeweils als Hallsensor, Infrarotsensor oder als induktiv arbeitender Sensor o. ä. ausgebildet sein.

### Bezugszeichenliste

- 10: Antriebseinheit
- 12: Gehäuse
- 13: Innengeometrie
- 14: Tretkurbelwelle
- 16: Hilfsantrieb, elektrisch
- 18: Elektromotor
- 20: Wellgetriebe
- 22: Abtriebselement
- 24: erstes Wälzlager
- 26: Gehäusedeckel
- 28: zweites Wälzlager
- 30: drittes Wälzlager
- 32: viertes Wälzlager
- 34: Wellgenerator
- 36: Innenbuchse, Flexspline
- 38: Außenring
- 40: erste Freilaufkupplung
- 42: zweite Freilaufkupplung
- 44: Stator
- 45: Spule
- 46: Rotor
- 48: Statorträger
- 49: Aussengeometrie
- 50: Elektronik, Elektronikplatine
- 52: Trageabschnitt
- 54: Befestigungsabschnitt
- 56: vormontierbare Einheit
- 58: erste Lagerstelle, Wälzlager
- 60: Durchführung für Signalleitungen
- 62: Durchführung für Leistungsleitungen
- 64: Kopplungsabschnitt
- 65: elliptische Aussenkontur
- 66: Wälzlager (Flexlager)
- 68: Vergussmasse
- 70: zweite Lagerstelle, Magnetlager
- 72: Flexleiter
- 74: erste Lage
- 76: zweite Lage
- 78: elektrische Schnittstelle
- 79: Kontaktflächen
- 80: Außenseite
- 82: Nut
- 84: Kontaktfahne
- 86: Schlitz
- 88: Vergussmasse, Abdeckung
- 89: Durchgangsöffnung
- 90: Positionssensorik
- 91: Aussparung
- 92: Näherungssensor
- 94: Exzenterelement, Exzenterring
- 200: Baugruppe
- 202: Kabelstrang
- 204: Stecker
- 206: Kontaktpins
- 208: Halteklammer

## Patentansprüche

1. Antriebseinheit (10) für ein muskelkraftbetriebenes Fahrzeug, insbesondere ein Fahrrad oder ein Electrically Power Assisted Cycle, mit einem Gehäuse (12), einem Elektromotor (18) mit einem Stator (44) und einem Rotor (46), einem Statorträger (48) und einer Elektronik (50), wobei der Statorträger (48), der Stator (44), der Rotor (46) und die Elektronik (50) als eine vormontierbare Einheit (56) ausgebildet sind, so dass die vormontierte Einheit (56) in das Gehäuse (12) montiert werden kann, **dadurch gekennzeichnet, dass** der Rotor (46) lediglich mittels nur eines Wälzlagers (58) am Statorträger (48) gelagert ist.

2. Antriebseinheit (10) nach Anspruch 1, **dadurch gekennzeichnet, dass** am Statorträger (48) eine oder mehrere Durchführungen (60, 62) für elektrische Signalleitungen und elektrische Leistungsleitungen ausgebildet sind und dass der Stator (44), die Elektronik (50) und der Rotor (46) am Statorträger (48) befestigt sind, wobei der Rotor (46) mittels eines Wälzlagers (58) am Statorträger (48) gelagert ist.

3. Antriebseinheit (10) nach Anspruch 1 oder 2, **dadurch gekennzeichnet, dass** der Statorträger (48) einen radial nach außen abragenden Befestigungsabschnitt (54) aufweist, mittels dem der Statorträger (48) in dem Gehäuse (12) der Antriebseinheit (10) montiert beziehungsweise fixiert werden kann, insbesondere mittels eines Pressverbands.

4. Antriebseinheit (10) nach einem der voranstehenden Ansprüche, **dadurch gekennzeichnet, dass** der Elektromotor (18) als Außenläufermotor ausgebildet ist.

5. Antriebseinheit (10) nach einem der voranstehenden Ansprüche, **dadurch gekennzeichnet, dass** der Rotor (46) einen hülsenförmigen Kopplungsabschnitt (64) zur Kopplung mit einem in dem Gehäuse (12) angeordneten Wellgetriebe (20) aufweist, wobei der Kopplungsabschnitt (64) eine elliptische Außenkontur (65) aufweist.

6. Antriebseinheit (10) nach einem der voranstehenden Ansprüche, **dadurch gekennzeichnet, dass** der Stator (44) des Elektromotors (18) mit dem Statorträger (48) vergossen ist.

7. Antriebseinheit (10) nach einem der voranstehenden Ansprüche, **dadurch gekennzeichnet, dass** ein Flexleiter (72) vorgesehen ist, der zwei Lagen (74, 76) aufweist und einends mit der Elektronik (50) verbunden ist und andernends eine elektrische Schnittstelle (78) mit mehreren Kontaktflächen (79) zum Anschluss eines fahrzeugseitigen Steckers (204) aufweist.

8. Antriebseinheit (10) nach Anspruch 7, **dadurch gekennzeichnet, dass** an der Außenseite (80) des Gehäuses (12) eine Nut (82) ausgebildet ist, in der der Flexleiter (72) und die elektrische Schnittstelle (78) angeordnet sind, und dass die Lagen (74, 76) des Flexleiters (72) durch eine Vergussmasse oder eine Abdeckung (88) bedeckt sind, wobei an der elektrischen Schnittstelle (78) eine Durchgangsöffnung (89) ausgebildet ist.

9. Antriebseinheit (10) nach einem der voranstehenden Ansprüche, **dadurch gekennzeichnet, dass** die Elektronik (50) eine Positionssensorik (90) zur Erfassung der Drehstellung der Tretkurbelwelle (14) der Antriebseinheit (10) aufweist, wobei die Positionssensorik (90) einen oder mehrere Näherungsensoren (92) und ein drehfest an der Tretkurbelwelle (14) befestigtes und mit dem oder den Näherungssensoren (92) zusammenwirkendes Exzenterelement (94), insbesondere einen Exzenterring (94) aufweist.

10. Baugruppe (200) aus einem Kabelstrang (202) eines muskelkraftbetriebenen Fahrzeugs, insbesondere Fahrrad oder ein Electrically Power Assisted Cycle, und einer Antriebseinheit (10) nach Anspruch 7, 8 oder 9, **dadurch gekennzeichnet, dass** der Kabelstrang (202) einen Anschlussstecker (204) zum Anschluss an die elektrische Schnittstelle (78) des Flexleiters (72) aufweist, wobei der Anschlussstecker (204) gefederte Kontaktpins (206) zur Kontaktierung der Kontaktflächen (79) aufweist und/oder der Anschlussstecker (204) mittels einer Halteklammer (208) an der Antriebseinheit (10) gesichert wird, wobei die Halteklammer (208) den Anschlussstecker (204) umgreift und in an der Außenseite (80) des Gehäuses (12) der Antriebseinheit (10) ausgebildete Aussparungen ( 91) einrastbar ist.

## Claims

1. Drive unit (10) for a vehicle operated by muscular force, in particular a bicycle or an electrically power assisted cycle, with a housing (12), an electric motor (18) with a stator (44) and a rotor (46), a stator carrier (48), and electronics (50), wherein the stator carrier (48), the stator (44), the rotor (46), and the electronics (50) are formed as a premountable unit (56) such that the premounted unit (56) can be mounted in the housing (12), **characterized in that** the rotor (46) is mounted on the stator carrier (48) only by means of just one rolling bearing (58).

2. Drive unit (10) according to Claim 1, **characterized in that** one or more ducts (60, 62) for electrical signal lines and electrical power lines are formed on the stator carrier (48), and **in that** the stator (44), the electronics (50), and the rotor (46) are fastened on the stator carrier (48), wherein the rotor (46) is mounted on the stator carrier (48) by means of a rolling bearing (58).

3. Drive unit (10) according to Claim 1 or 2, **characterized in that** the stator carrier (48) has a radially outwardly projecting fastening section (54) by means of which the stator carrier (48) can be mounted or fixed in the housing (12) of the drive unit (10), in particular by means of a press fit.

4. Drive unit (10) according to one of the preceding claims, **characterized in that** the electric motor (18) is designed as an external rotor motor.

5. Drive unit (10) according to one of the preceding claims, **characterized in that** the rotor (46) has a sleeve-shaped coupling section (64) for coupling to a harmonic drive (20) arranged in the housing (12), wherein the coupling section (64) has an elliptical outer contour (65).

6. Drive unit (10) according to one of the preceding claims, **characterized in that** the stator (44) of the electric motor (18) is potted to the stator carrier (48) .

7. Drive unit (10) according to one of the preceding claims, **characterized in that** a flex conductor (72), which has two layers (74, 76) and is connected at one end to the electronics (50) and at the other end has an electrical interface (78) with multiple contact surfaces (79) for connection to a vehicle-side plug (204), is provided.

8. Drive unit (10) according to Claim 7, **characterized in that** a groove (82), in which the flex conductor (72) and the electrical interface (78) are arranged, is formed on the outer side (80) of the housing (12), and **in that** the layers (74, 76) of the flex conductor (72) are covered by a potting compound or a covering (88), wherein a through opening (89) is formed at the electrical interface (78).

9. Drive unit (10) according to one of the preceding claims, **characterized in that** the electronics (50) have a position sensor system (90) for detecting the rotational position of the bottom bracket shaft (14) of the drive unit (10), wherein the position sensor system (90) has one or more proximity sensors (92) and an eccentric element (94), in particular an eccentric ring (94), fastened non-rotatably to the bottom bracket shaft (14) and interacting with the proximity sensor or sensors (92) .

10. Assembly (200) consisting of a wiring loom (202) of a vehicle operated by muscular force, in particular a bicycle or an electrically power assisted cycle, and a drive unit (10) according to Claim 7, 8, or 9, **characterized in that** the wiring loom (202) has a connector plug (204) for connection to the electrical interface (78) of the flex conductor (72), wherein the connector plug (204) has spring-loaded contact pins (206) for contacting the contact surfaces (79), and/or the connector plug (204) is secured to the drive unit (10) by means of a retaining clamp (208), wherein the retaining clamp (208) grips the connector plug (204) and can be latched into recesses (91) which are formed on the outer side (80) of the housing (12) of the drive unit (10) .

## Revendications

1. Unité d'entraînement (10) pour un véhicule à propulsion musculaire, en particulier une bicyclette ou un cycle assisté électriquement, comprenant un boîtier (12), un moteur électrique (18) avec un stator (44) et un rotor (46), un support de stator (48) et une électronique (50), le support de stator (48), le stator (44), le rotor (46) et l'électronique (50) étant réalisés sous la forme d'une unité (56) apte à être prémontée, de sorte que l'unité prémontée (56) est apte à être montée dans le boîtier (12), **caractérisée en ce que** le rotor (46) est monté sur le support de stator (48) uniquement au moyen d'un seul palier à roulement (58).

2. Unité d'entraînement (10) selon la revendication 1, **caractérisée en ce qu'**un ou plusieurs passages (60, 62) pour des lignes de signaux électriques et des lignes de puissance électriques sont formés sur le support de stator (48) et **en ce que** le stator (44), l'électronique (50) et le rotor (46) sont fixés sur le support de stator (48), le rotor (46) étant monté sur le support de stator (48) au moyen d'un palier à roulement (58).

3. Unité d'entraînement (10) selon la revendication 1 ou la revendication 2, **caractérisée en ce que** le support de stator (48) présente une section de fixation (54) faisant saillie radialement vers l'extérieur, au moyen de laquelle le support de stator (48) est apte à être monté ou fixé dans le boîtier (12) de l'unité d'entraînement (10), notamment au moyen d'un assemblage par pression.

4. Unité d'entraînement (10) selon l'une des revendications précédentes, **caractérisée en ce que** le moteur électrique (18) est conçu sous la forme d'un moteur à rotor extérieur.

5. Unité d'entraînement (10) selon l'une des revendications précédentes, **caractérisée en ce que** le rotor (46) présente une section de liaison (64) en forme de douille pour la liaison avec un engrenage ondulé (20) disposé dans le boîtier (12), la section de liaison (64) présentant un contour extérieur elliptique (65).

6. Unité d'entraînement (10) selon l'une des revendications précédentes, **caractérisée en ce que** le stator (44) du moteur électrique (18) est coulé avec le support de stator (48).

7. Unité d'entraînement (10) selon l'une des revendications précédentes, **caractérisée en ce qu'**il est prévu un conducteur flexible (72) qui présente deux couches (74, 76) et qui est relié à une extrémité à l'électronique (50) et qui présente à l'autre extrémité une interface électrique (78) avec plusieurs surfaces de contact (79) pour le raccordement d'un connecteur (204) côté véhicule.

8. Unité d'entraînement (10) selon la revendication 7, **caractérisée en ce qu'**une rainure (82) est formée sur la face extérieure (80) du boîtier (12), dans laquelle sont disposés le conducteur flexible (72) et l'interface électrique (78), et **en ce que** les couches (74, 76) du conducteur flexible (72) sont recouvertes par une masse de scellement ou un couvercle (88), une ouverture de passage (89) étant formée sur l'interface électrique (78).

9. Unité d'entraînement (10) selon l'une des revendications précédentes, **caractérisée en ce que** l'électronique (50) présente un système de capteurs de position (90) pour détecter la position de rotation de l'arbre de pédalier (14) de l'unité d'entraînement (10), le système de capteurs de position (90) présentant un ou plusieurs capteurs de proximité (92) et un élément excentrique (94), en particulier une bague excentrique (94), fixé de manière solidaire en rotation sur l'arbre de pédalier (14) et coopérant avec le ou les capteurs de proximité (92).

10. Ensemble (200) constitué d'un faisceau de câbles (202) d'un véhicule à assistance musculaire, notamment d'une bicyclette ou d'un cycle assisté électriquement, et d'une unité d'entraînement (10) selon la revendication 7, 8 ou 9, **caractérisé en ce que** le faisceau de câbles (202) comporte un connecteur de raccordement (204) pour le raccordement à l'interface électrique (78) du conducteur flexible (72), le connecteur de raccordement (204) présentant des broches de contact (206) à ressort pour la mise en contact des surfaces de contact (79) et/ou la fiche de raccordement (204) étant fixée à l'unité d'entraînement (10) au moyen d'une pince de retenue (208), la pince de retenue (208) entourant la fiche de raccordement (204) et étant apte à être encliquetée dans des évidements (91) formés sur le côté extérieur (80) du boîtier (12) de l'unité d'entraînement (10) .
